# EUROPEAN PATENT APPLICATION

(11) **EP 3 142 335 A1**
(43) Date of publication of application: **15.03.2017**
(21) Application number: 15306394.6
(22) Date of filing: 11.09.2015
(51) Int. Cl.: H04L 29/08, H04L 29/06

(54) **METHOD AND CACHE FOR CACHING MULTIMEDIA CONTENT**

(71) Applicant: Thomson Licensing, 92130 Issy-les-Moulineaux (FR)
(72) Inventor: GOUACHE, Stéphane, 35576 CESSON-SEVIGNE (FR); HOUDAILLE, Rémi, 35576 CESSON-SEVIGNE (FR); TAIBI, Charline, 35576 CESSON-SEVIGNE (FR)
(74) Representative: Huchet, Anne

(57) **Abstract**

Method for operating a cache (R) arranged along a transmission path between client terminals (CT) and a server (S), comprising:
- receiving, from the client terminals (CT), chunk requests for chunks of a multimedia content, each requested chunk being assigned a priority level;
- determining a download priority order according to which each requested chunk not yet cached is to be downloaded, this download priority order being determined based on the priority level of each chunk to be downloaded; and
- downloading, from said server (S), each requested chunk not yet cached according to the download priority order, such that the requested chunk with a high priority level is downloaded in priority over any other requested chunk of lower priority level.

The disclosure also concerns a cache operating according to said method.

## Description

### 1. Technical field

The present disclosure relates generally to the domain of the adaptive streaming technology over, for instance but not exclusively, HTTP (HyperText Transfer Protocol) and, in particular, to the reception, by a client terminal, of a multimedia content split into segments.

### 2. Background art

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Adaptive streaming over HTTP (also called multi-bit-rate switching or HAS) is quickly becoming a major technology for multimedia content distribution. Among the HTTP adaptive streaming protocols which are already used, the most famous are the HTTP Live Streaming (HLS) from Apple, the Silverlight Smooth Streaming (SSS) from Microsoft, the HTTP Dynamic Streaming (HDS) from Adobe, the Dynamic Adaptive Streaming over HTTP (DASH) developed by 3GPP and MPEG (standardized as ISO/IEC 23009-1:2012).

When a client terminal wishes to play an audiovisual content (or A/V content) in adaptive streaming, it first has to get a file describing how this A/V content might be obtained. This is generally done through the HTTP protocol by getting a description file, so-called manifest, from an URL (Uniform Resource Locator), but can be also achieved by other means (e.g. broadcast, e-mail, SMS and so on). The manifest - generated and delivered to the client terminal by a remote server - basically lists the available representations (also called instances or versions) of such an A/V content (in terms of bit-rate, resolution and other properties). A representation is associated with a given quality level (bit-rate).

The whole data stream of each representation is divided into segments (also called chunks), usually of equal duration (accessible by a separate URL), which are made such that a client terminal may smoothly switch from one quality level to another between two segments. As a result, the video quality may vary while playing but rarely suffers from interruptions (also called freezes).

At the client side, the chunks of a given multimedia content are selected based on a measure of the available bandwidth of the transmission path. In particular, a client terminal usually requests the representation of a chunk corresponding to a bit-rate encoding (and thus a quality) compliant with the measured bandwidth. The available bandwidth, also called network bandwidth or bandwidth throughout the description, refers to the network throughput, in bit/s.

A client terminal typically chooses the best representation at a given point in time to optimize the trade-off between the quality (e.g. video quality) and the robustness to network variations.

When a cache is arranged along the transmission path between a client terminal and a remote server, it may happen for various reasons that one chunk at a given representation which is requested by a client terminal is already stored in said cache. This will occur for instance if another client has previously requested the same chunk or in case a Content Delivery Network (CDN) has already provisioned the chunk in the cache. Thus, the response to an HTTP request for said given chunk is faster than if the chunk comes from the remote server.

Further, when a cache is along the transmission path between a plurality of client terminals and a server, a situation may arise where multiple chunk requests are received by the cache from various client terminals, each of said request defining a chunk of a multimedia content at a given representation that said cache has to retrieve and transmit to the requesting client terminal.

The response time necessary for the cache to respond to each chunk request dramatically varies depending on whether or not the requested chunk is already available in said cache. When not available in cache yet, the cache has to download the requested chunks from the server. As can be understood, the cache can thus transmit faster a requested chunk that is already available in cache relative to a requested chunk that has first to be downloaded from a remote server. Because of this variability in the time response, it is particularly difficult for a client terminal to estimate the available bandwidth, as the latter will strongly depend on whether a requested chunk is already (at least partially) available in the cache.

Another difficulty resides in downloading in advance in the cache the appropriate representation of a chunk, as this requires predicting with accuracy what a client terminal is likely to request in the future.

Managing the incoming chunk requests can become very complex when a large volume of chunk requests has to be processed simultaneously by the cache. In some instances, client terminals may receive requested chunks smoothly while other client terminals suffer some delays in the content distribution, sometimes leading to detrimental interruptions for the user experience.

The present disclosure attempts to remedy at least some of the above-mentioned concerns for improving the quality of end user experience.

### 3. Summary

The present disclosure relates to a method for operating a cache arranged along a transmission path between a plurality of client terminals and at least one server, said method comprising:
- receiving, from said plurality of client terminals, chunk requests for at least one chunk of a multimedia content, each requested chunk being assigned a priority level;
- determining a download priority order according to which each requested chunk not yet cached in said cache is to be downloaded, said download priority order being determined based on the assigned priority level of each chunk to be downloaded; and
- downloading, from said at least one server, each requested chunk not yet cached in said cache according to said download priority order, such that each requested chunk with a high priority level is downloaded in priority over any other requested chunk with a lower priority level.

The present disclosure can allow prioritizing downloading, in an intermediate cache, of all the chunks of multimedia content not yet available in cache, which are requested at a given time by at least one client terminal. When treating multiple chunk requests at the same time, a cache according to the present disclosure can favour downloading of the chunks having a high priority level relative to any other requested chunk having a lower priority level. Based on the priority level assigned by the requesting client terminals to each requested chunk, the cache of the present disclosure may be able to determine an optimized order according to which requested chunks are to be retrieved from one or more remote servers. Thanks to the present disclosure, the cache can retrieve, and thus transmit to the corresponding client terminals, the most urgent chunks of multimedia content in priority, thereby limiting the risks of display interruption and improving user experience while, at the same time, the cache can attempt to pre-fetch chunks of lower priority when resources allow it, thereby increasing the cache hit ratio.

In a particular embodiment of the disclosure, the method can comprise:
- storing, for each requested chunk to be downloaded;
   ▪ a high priority counter representative of the number of client terminals currently requesting said chunk at said high priority level; and
   ▪ a low priority counter representative of the number of client terminals currently requesting said chunk at a low priority level that is lower than said high priority level;
   wherein the download priority order is determined based on the state of the high priority counter and low priority counter of each chunk to be downloaded.

By tracking the number of client terminals requesting at a given time a particular chunk at a high priority level and at a low priority level, the cache can adapt the download priority order in an efficient and dynamic manner so that the most important requested chunks (not yet in cache R) are always downloaded first.

In a particular embodiment of the disclosure, the method can comprise, upon reception of a chunk request from a client terminal:
- if said chunk is requested at said high priority level, updating the high priority counter of the requested chunk to indicate that one more client terminal is currently requesting said chunk at said high priority level ; and
- if said chunk is requested at said low priority level, updating the low priority counter of the requested chunk to indicate that one more client terminal is currently requesting said chunk at said low priority level.

In a particular embodiment of the disclosure, the method can comprise:
- receiving a priority reordering request from a client terminal for modifying the priority level of a chunk for which a chunk request from said client terminal is already in progress in said cache; and
- updating the high priority counter and the low priority counter of the requested chunk in accordance with said priority reordering request.

The present disclosure can allow a cache to track the changes in priority assignments from client terminals and to adapt accordingly the order in which said cache downloads each requested chunk of a multimedia content from one or more remote servers.

In a particular embodiment of the disclosure, the method can comprise, upon reception of a cancellation request from a client terminal for cancelling a chunk request in progress for a chunk in said cache:
- if said chunk was requested at said high priority level, updating the high priority counter of the chunk to indicate that one less client terminal is currently requesting said chunk at said high priority level ; and
- if said chunk was requested at said low priority level, updating the low priority counter of the chunk to indicate that one less client terminal is currently requesting said chunk at said low priority level.

The present disclosure can allow a cache to define a download priority order according to which requested chunks of multimedia content are to be downloaded from at least one remote server, and to dynamically adapt this download priority order if one or more clients cancel a previously-issued request for a particular chunk.

In a particular embodiment of the disclosure, if the cancellation request results in the high priority counter and low priority counter being both at zero for the corresponding chunk, the cache can select, based on how much of said chunk is already in cache, between:
- aborting download of said chunk from said at least one server; and
- completing download of said chunk from said at least one server.

In a particular embodiment of the disclosure, the method can comprise transmitting, once at least partially available in said cache, each requested chunk (or at least part of it) to the client terminal from which the corresponding chunk request originates, provided that the chunk request is still pending at the time of transmission.

In a particular embodiment of the disclosure, the transmission can be carried out according to a transmission priority order determined by said cache based on the assigned priority level of each chunk to be transmitted, such that each requested chunk with said high priority is transmitted in priority over any other requested chunk with a lower priority level.

In a particular embodiment of the disclosure, said transmission of each requested chunk can be carried out over a dedicated channel of the transmission path.

In a particular embodiment of the disclosure, the method can comprise:
- storing a cache list representative of each requested chunk stored in said cache; and
- storing a fetching list representative of each requested chunk not yet in cache;
wherein, upon completing download of a requested chunk from said at least one server, said cache removes an entry of the requested chunk from the fetching list and inserts an entry of the requested chunk into said cache list.

Another aspect of the disclosure pertains to a computer program product downloadable from a communication network and/or recorded on a medium readable by computer and/or executable by a processor, comprising program code instructions for implementing a method as defined above.

In addition, the present disclosure concerns a non-transitory computer-readable medium comprising a computer program product recorded thereon and capable of being run by a processor, including program code instructions for implementing a method as defined above.

Correlatively, the disclosure concerns a cache arranged along a transmission path between a plurality of client terminals and at least one server, said cache comprising:
- a receiving module for receiving, from said plurality of client terminals, chunk requests for at least one chunk of a multimedia content, each requested chunk being assigned a priority level;
- a download priority module for determining a download priority order according to which each requested chunk not yet cached in said cache is to be downloaded, said download priority order being determined based on the assigned priority level of each chunk to be downloaded; and
- a downloading module for downloading, from said at least one server, each requested chunk which is not yet cached in said cache, according to said download priority order, such that each requested chunk with a high priority level is downloaded in priority over any other requested chunk with a lower priority level.

In a particular embodiment of the disclosure, the cache can be a HTTP Adaptive Streaming aware cache.

In a particular embodiment, the download priority module is configured to store, for each requested chunk to be downloaded:
▪ a high priority counter representative of the number of client terminals currently requesting said chunk at said high priority level; and
▪ a low priority counter representative of the number of client terminals currently requesting said chunk at a low priority level that is lower than said high priority level;
wherein the download priority module is configured to determine the download priority order based on the state of the high priority counter and low priority counter of each chunk to be downloaded.

The disclosure also concerns a cache configured to be arranged along a transmission path between a plurality of client terminals and at least one server, said cache comprising one or more processors configured to perform:
- receiving, from said plurality of client terminals, chunk requests for at least one chunk of a multimedia content, each requested chunk being assigned a priority level;
- determining a download priority order according to which each requested chunk not yet cached in said cache is to be downloaded, said download priority order being determined based on the assigned priority level of each chunk to be downloaded; and
- downloading, from said at least one server, each requested chunk not yet cached in said cache according to said download priority order, such that each requested chunk with a high priority level is downloaded in priority over any other requested chunk with a lower priority level.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### 4. Brief description of the drawings

The disclosure will be better understood and illustrated by means of the following embodiment and execution examples, in no way limitative, with reference to the appended figures on which:
- figure 1 is a schematic diagram of a Client-Server network architecture wherein the present disclosure might be implemented;
- figure 2 is a flow chart illustrating the main steps of a method for operating a cache according to an embodiment of the disclosure;
- figure 3 is a block diagram of a cache according to an embodiment of the disclosure;
- figure 4 is a flow chart illustrating the steps of a method for operating a cache according to an embodiment of the disclosure; and
- figures 5, 6 and 7 illustrate operation of the cache of figure 3 according to particular embodiments of the disclosure.

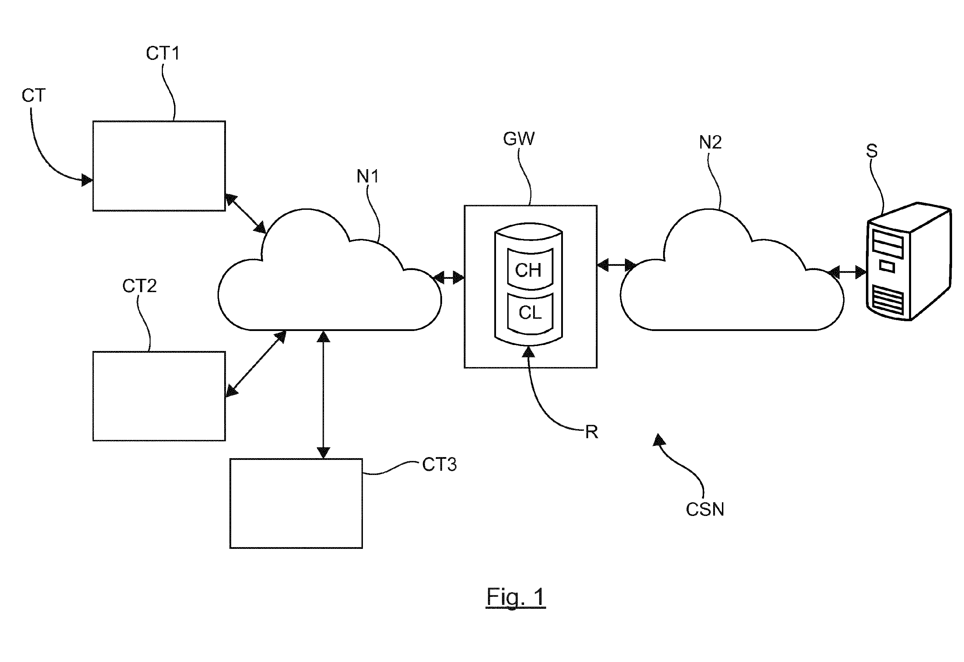

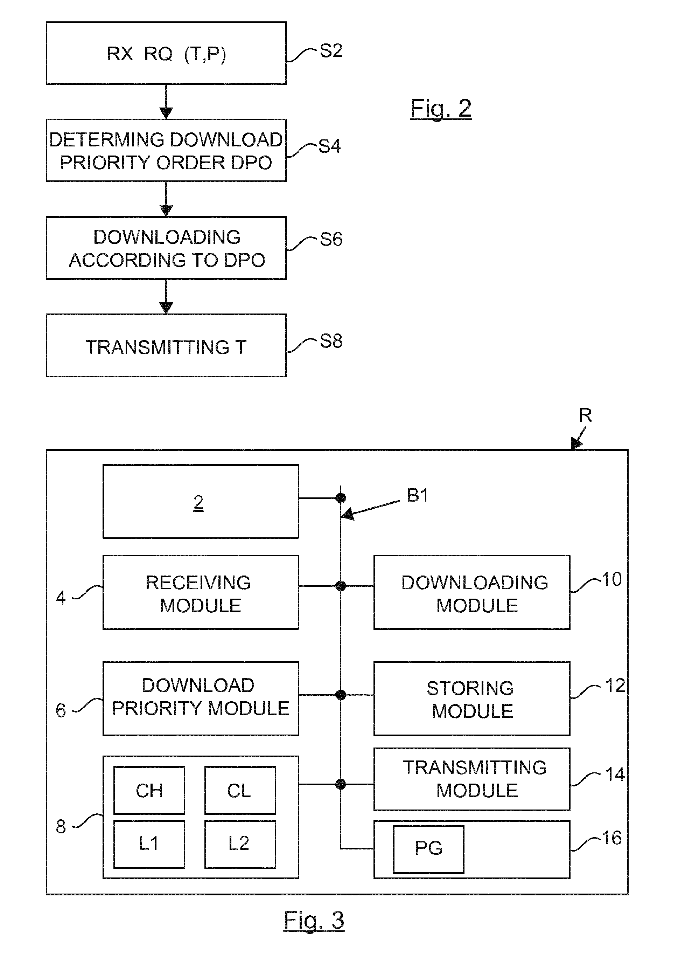

In Figures 1 and 3, the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### 5. Description of embodiments

It is to be understood that the figures and descriptions of the present disclosure have been simplified to illustrate elements that are relevant for a clear understanding of the present disclosure, while eliminating, for purposes of clarity, many other elements found in typical digital multimedia content delivery methods and systems.

According to a preferred embodiment, the present disclosure is depicted with regard to the HTTP adaptive streaming protocol (or HAS). Naturally, the disclosure is not restricted to such a particular environment and other adaptive streaming protocols or more general transmission protocols could of course be considered and implemented.

As depicted in **figure 1****,** the Client-Server network CSN, in which the present disclosure might be implemented, can comprise several client terminals CT1, CT2 and CT3 (referred to collectively as CT), a gateway GW (hardware and/or virtual) and one or more HTTP servers S (only one is represented on **figure 1**).

The client terminals CT - connected to the gateway GW through a first network N1 (as a home network or an enterprise network) - may wish to connect to a HTTP server S through a second network N2 (as the Internet network). The first network N1 can be connected to the second network N2 via the gateway GW.

In particular, client terminals CT can be portable media devices, mobile phones, tablets or laptops. Naturally, client terminals might not comprise a complete video player, but only some sub-elements such as the ones for demultiplexing and decoding the media content to the end user. In the present case, the client terminals CT are HTTP Adaptive Streaming (HAS) capable video decoders, such as set-top boxes.

In response to client requests, the HTTP server S may stream chunks of multimedia content to the requesting client terminals CT, using HTTP adaptive streaming protocol over one TCP/IP connection.

It will be assumed in the following that only one server S is used to stream the request content to the client terminals CT via the gateway. However, it should be understood that a plurality of servers S may equally be used to provide the requested multimedia content, depending on the context of use.

The gateway GW in this particular embodiment may comprise a cache R. In other words, the cache R is arranged along the transmission path between the client terminals CT and the server S. In a variant, said cache R might be arranged in a proxy of the first network N1, arranged along the transmission path between the clients terminals and the server S.

The main steps implemented by the cache R for carrying out an operating method according to an embodiment of the disclosure are represented in the flow diagram of figure 2. More specifically, the operating method of this particular embodiment comprises:
- receiving (S2), from a plurality of client terminals CT, chunk requests RQ for at least one chunk T of a multimedia content (at a given representation), each requested chunk T being assigned a priority level P;
- determining (S4) a download priority order DPO according to which each requested chunk T not yet cached in said cache is to be downloaded, this download priority order DPO being determined based on the assigned priority level P of each chunk T to be downloaded; and
- downloading (S6), from the server S, each requested chunk T not yet cached according to said download priority order DPO, such that each requested chunk with a high priority level is downloaded in priority over any other requested chunk T with a lower priority level.

The cache R can thus retrieve each requested chunk T in a most appropriate order, allowing requested chunks of most importance (i.e. which should be supplied without delay to the requesting client terminal CT) to be retrieved in priority over the requested chunks of less importance. Once available in cache, the cache R may transmit (S8) the requested chunks T to the corresponding client terminals, provided that the chunk request for each chunk at hand is still pending at the time of transmission.

To determine the download priority order DPO, the cache R may in particular rely on a high priority counter CH and a low priority counter CL stored in said cache for each requested chunk to be downloaded by the cache R from server S **(****figure 1****),** wherein:
▪ the high priority counter CH is for instance representative of the number of client terminals CT currently requesting said chunk T at a high priority level HP; and
▪ the low priority counter CL is for instance representative of the number of client terminals CT currently requesting said chunk T at a low priority level LP that is lower than said high priority level HP.

By tracking the number of client terminals requesting at a given time a particular chunk at a high priority level and at a low priority level, the cache R can thus adapt the download priority order DPO in an efficient and dynamic manner so that the most important requested chunks (not yet in cache R) are always downloaded first.

**Figure 3** depicts schematically the exemplary structure of the cache R according to a particular embodiment of the present disclosure.

As shown in **figure 3****,** the cache may comprise one or more processors 2 (or more generally one or more controlling modules), a receiving module 4, a download priority module 6, a rewritable non-volatile memory 8, a downloading module 10, a storing module 12, a transmitting module 14 and a non-volatile memory 16.

Receiving module 4 can be operable to receive chunk requests RQ from the client terminals CT. Each chunk request RQ may define at least one chunk T of a multimedia content that a client terminal CT wishes to receive, each chunk T being assigned a priority level P by the client. Each chunk T is a portion (or segment) of a multimedia content at a given representation.

In a particular embodiment, receiving module 4 receives each request RQ for a particular chunk T on a dedicated channel of the transmission path between the requesting client terminal CT and cache R.

Download priority module 6 can be operable to determine a download priority order DPO according to which each requested chunk T not yet cached in cache R is to be downloaded, said download priority order DPO being determined based on the assigned priority level P of each chunk T to be downloaded. An example of how the download priority order 6 may determine the download priority order DPO will be provided below in a particular embodiment of the disclosure.

Rewritable non-volatile memory 8 may be of the EEPROM type for instance. In this particular embodiment, memory 8 may be used to store, for each chunk requested by at least one client terminal CT, a high priority counter CH and low priority counter CL. In this example, memory 8 may also store a fetching list L1 and a cache list L2. An exemplary use of counters CH and CL, and of lists L1 and L2 will be provided below in a particular embodiment of the disclosure.

Downloading module 10 can be operable to download, from server S, each requested chunk T not yet cached in cache R, according to the download priority order DPO determined by the download priority module 6, such that each requested chunk T with a high priority level is downloaded in priority over any other requested chunk with a lower priority level.

Storing module 12 can be operable to cache each requested chunk T. More specifically, in a particular embodiment, storing module 12 may comprise a volatile and/or permanent memory for storing chunks T of multimedia contents received from server S before their transmission to client terminals CT, requesting such multimedia contents.

Transmitting module 14 can be operable to transmit, once available in cache (i.e. in storing module 12 in this example), each requested chunk T of multimedia content to the client terminal CT from which the corresponding chunk request RQ originates, provided that the chunk request is still pending at the time said transmitting module 14 performs said transmission.

In a particular embodiment, transmitting module 14 may be configured to transmit, to the requesting client terminals CT, the requested chunks already in cache according to a transmission priority order TPO that it can determine based on the assigned priority level of each requested chunk already in cache.

Non-volatile memory 16 may be of the ROM type or a non-volatile rewritable memory (e.g. EEPROM) for instance.

Memory 16 may constitute a recording medium in accordance with an embodiment of the disclosure. Memory 16 may include a computer program PG according to an embodiment of the disclosure, this computer program comprising instructions to implement an operating method according to an embodiment of the disclosure.

Some elements typically included in a cache have been voluntarily omitted in the present embodiment to enhance clarity of the present disclosure.

An internal bus B1 is provided to connect the various modules and all means well known to the skilled in the art for performing the generic cache functionalities.

In a particular embodiment, the disclosure can be implemented using software and/or hardware components. In this context, the term "module" can refer in this document to a software component, as well as a hardware component or a plurality of software and hardware components.

In a particular embodiment, at least one (or all) of receiving module 4, downloading priority module 6, downloading module 10, storing module 12 and transmitting module 14 may be at least partially implemented by processor 2 carrying out instructions of computer program PG stored in memory 14.

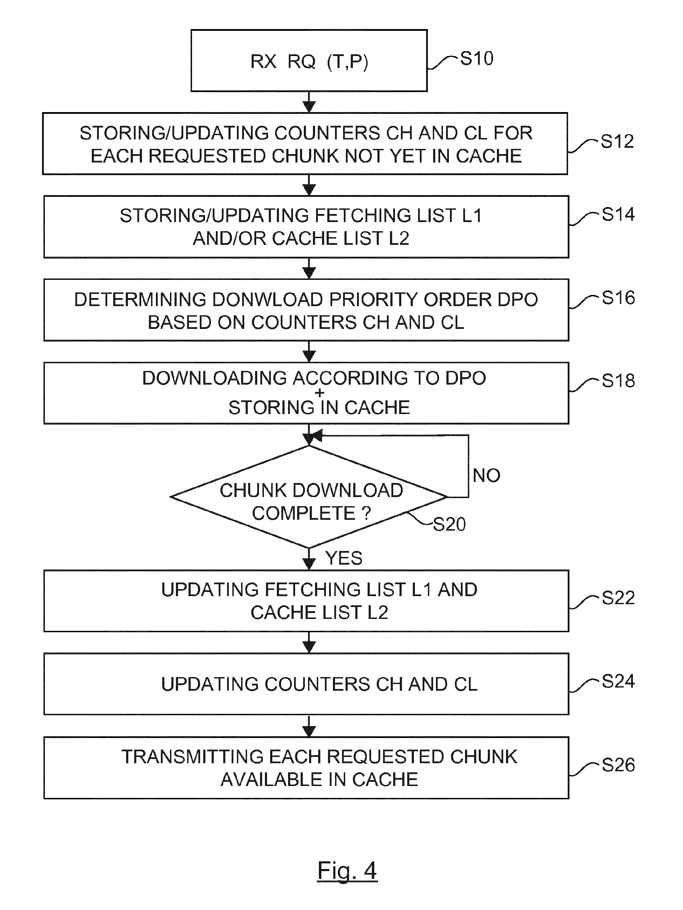

**Figure 4** illustrates the overall process implemented by the cache R according to a particular embodiment of the present disclosure. More specifically, cache R implements this operating method by executing computer program PG stored in memory 16.

In the following, it is assumed that the priority level P of each requested chunk T is either a high priority level HP (P=HP) or a low priority level LP (P=LP). A client terminal CT assigns a high priority level HP to a chunk T of particular importance, i.e. which has to be received in priority. Typically, a high priority chunk T is a chunk that a client terminal CT plans to display immediately (or shortly) after a chunk being currently displayed. Similarly, a client terminal CT assigns a low priority level LP to a chunk of less importance, i.e. which does not require reception in priority. Typically, a low priority chunk T is a chunk which is relatively distant in time from a chunk being currently displayed by the requesting client terminal CT. It should be understood, however, that this constitutes only a non-limitative example of the disclosure. The way levels of priority are allocated by each client terminal CT to the requested chunks may be adapted depending on the context of use.

In a particular embodiment, each client terminal CT may assign, to a requested chunk, a priority value within a range of priority values comprised between HPmin and HPmax, each of these priority values qualifying as high priority level HP. Similarly, each client terminal may assign, to a requested chunk, a priority value within a range of priority values comprised between LPmin and LPmax, each of these priority values qualifying as low priority level LP.

In a particular embodiment, HPmin is equal to HPmax and LPmin is different from LPmax such that there is only one possible priority value qualifying as high priority level HP and there is a plurality of possible priority values qualifying as low priority level LP. Other examples may of course be contemplated.

As an initial state, it is assumed in this example that no chunk is being requested by the client terminals CT. Accordingly, no counter CH and CL is stored in memory 8 of cache R. Additionally, in this initial state, the lists L1 and L2 in memory 8 are empty. Other configurations may of course be contemplated in the present disclosure.

As shown in **figure 4****,** receiving module 4 of cache R may receive (S10) chunk requests RQ from the client terminals CT. As already mentioned, each chunk request RQ can define at least one chunk T of a multimedia content that the requested client terminal CT wishes to receive at a given representation. Each requested chunk T can be associated, in a chunk request RQ, with a respective priority level (HP or LP) assigned by the requesting client terminal CT.

In a particular example, for each requested chunk, the client terminals CT may send a specific chunk request over a dedicated channel of the transmission path between the client terminal CT at hand and the cache R. In order to achieve apparent stream independence, the chunk requests RQ from the client terminals CT can be encapsulated as a series of frames, each marked with the corresponding stream identifier. Each chunk request RQ comprises for instance a priority level P assigned to the chunk T at hand.

Further, for each requested chunk T not yet stored in cache R (i.e. in storing module 12), the download priority module 6 may store (or updates) (S12) a high priority counter CH and a low priority counter CL in memory 8, wherein the state (or value) of these counters CH, CL is determined based on the priority level P associated with each chunk requested in S10.

In a particular embodiment, for each requested chunk T not yet stored in cache R, the download priority module 6 may store (or updates) (S12) a high priority counter CH and a low priority counter CL in memory 8 such that, for each chunk:
- the high priority counter CH is for instance representative of the number of client terminals CT currently requesting said chunk at the high priority level HP; and
- the low priority counter CL is for instance representative of the number of client terminals CT currently requesting said chunk at a low priority level that is lower than said high priority level.

In other words, the high priority counter CH (respectively low priority counter CL) can track how many client terminals CT are requesting with a high priority level (respectively low priority level) a particular chunk of multimedia content at a given time.

In the present example, for each chunk T (not yet in cache R) requested with a high priority level HP, the download priority module 6 may increment (S12) by 1 the value of the corresponding high priority counter CH. Similarly, for each chunk T (not yet in cache R) requested with a low priority level LP, the download priority module 6 may increment (S12) by 1 the value of the corresponding low priority counter CL.

In S14, download priority module 6 may update the fetching list L1 to include therein an entry for each chunk requested by at least one client terminal CT and which is not yet available in cache. In other words, fetching list L1 indicates for instance which requested chunk has to be downloaded by cache R from server S.

In this particular embodiment, the cache list L2 may indicate each requested chunk which is already stored in cache R (in storing module 12) and which has still to be transmitted to at least one requesting client terminal CT.

In a case where one or more requested chunks are already stored in the storing module 12, the transmitting module 14 may be configured to transmit these chunks to the requesting client terminals CT. In this case, the download priority module 6 can update (S12) the cache list L2 to include therein an entry for each requested chunk which is already stored in said cache R.

In the present example, it is assumed that cache list L2 is empty since no requested chunk T is available at this stage in cache R.

In S16, the download priority module 6 may determine a download priority order DPO according to which each requested chunk T not yet cached in said cache R is to be downloaded, this download priority order DPO being determined based for instance on the assigned priority level P of each requested chunk T to be downloaded by cache R.

In S18, the downloading module 10 may download from server S each requested chunk T not yet cached in cache R, according to the download priority order DPO determined in S16. The download priority order DPO can be computed in S16 such that each requested chunk T with a high priority level HP is downloaded in priority over any other requested chunk T with a low priority level LP.

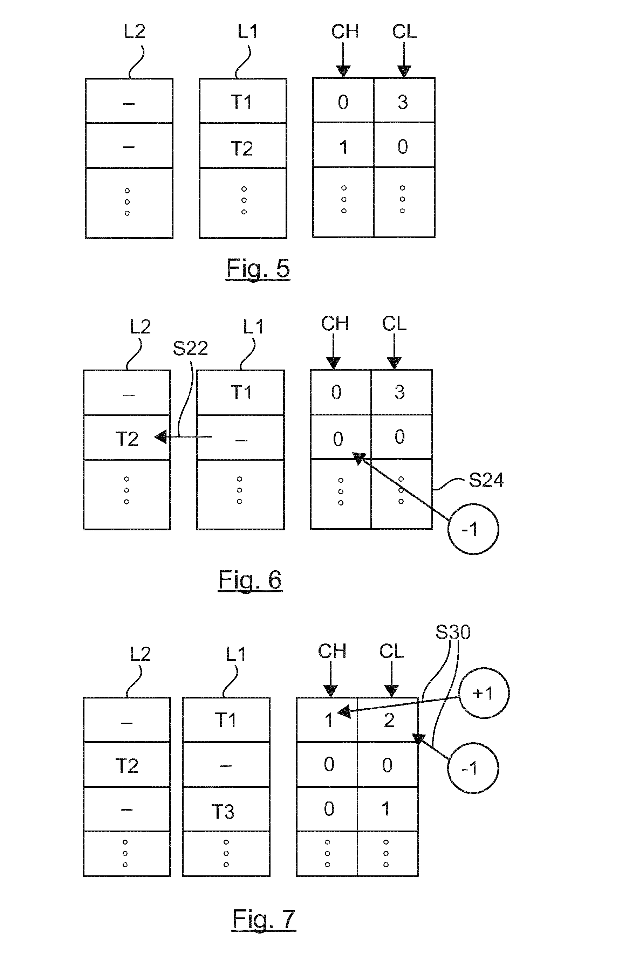

**Figure 5** illustrates the state of the high and low priority counters CH, CL and of the fetching list L1 and cache list L2 in a particular example where:
- 3 client terminals CT1, CT2 and CT3 are currently requesting a particular chunk T1 at a low priority level LP; and
- client terminal CT2 is currently requesting another chunk T2 at a high priority level HP.

Assuming of course that these chunks T1 and T2 are not yet available in cache of said cache R, the download priority module 6 may allocate (S14) the value 3 to the low priority counter CL of chunk T1 and allocates (S14) the value 1 to the high priority counter CH of chunk T2. Further, download priority module 6 inserts (S14) for instance an entry of chunk T1 and an entry for chunk T2 in fetching list L1 as both T1 and T2 need to be retrieved from server S. Cache list L2 remains empty in this example as neither T1 nor T2 is available at this stage in cache. Still in this example, the downloading module 10 may download (S18) from server S chunk T2 in priority over chunk T1. If sufficient bandwidth is available on the transmission path between the cache R and server S, the downloading module 10 may also download chunk T1 in addition to T2, provided that it does not impede downloading of T2.

Each chunk downloaded by the downloading module 10 in S18 can be stored in cache (i.e. in storing module 12).

In S20, download priority module 6 may determine if downloading of a requested chunk T from server S is complete.

Upon detection (S20) that download of a requested chunk T from server S is complete, download priority module 6 may update (S22) the fetching list L1 and the cache list L2, and may also update (S24) the corresponding high and low priority counters CH, CL (these updates being carried out in any order that is deemed appropriate).

In a particular embodiment, download priority module 6 removes (S22) for instance from the fetching list L1 the entry of a chunk T for which download completion has been detected (S20), and inserts (S22) an entry of said chunk T into cache list L2. In this particular example, as soon as a chunk T is indicated in cache list L2, said chunk T is ready for transmission to the one or more requesting client terminals CT. It should however be appreciated that other alternatives can be contemplated where the cache R is for instance configured to start transmitting a requested chunk T before completing download of said chunk T from the server. In this case, the cache R may transmit an available part of a requested chunk T to a requesting client terminal CT while downloading in parallel a missing part of the requested chunk T.

In a particular embodiment, download priority module 6 may fix (S24) at zero (or delete) the high and low priority counters CH, CL of each chunk T for which download from server S is complete. Other embodiments may however be contemplated in the disclosure.

Following the example of **figure 5, figure 6** illustrates a case where download priority module 6 detects (S20) that download of priority chunk T2 from server S is complete. As a result, download priority module 6 may remove (S22) the entry of chunk T2 from fetching list L1 and insert (S22) an entry of chunk T2 into cache list L2.

As shown in **figure 6****,** download priority module 6 may also fix (S24) at zero the high and low priority counters CH, CL of chunk T2 for which download completion from server S has been detected in S20. In any case, counters CH and CL are no more necessary to track the number of client terminals currently requesting chunk T2 since T2 is now stored in cache R. As already mentioned, the high and low priority counters CH, CL allow tracking the number of client terminals currently requesting, at a high and low priority level respectively, a chunk T not yet stored in cache R.

In S26, the transmitting module 14 may transmit each requested chunk T (or at least part thereof), which is available in cache R, to each client terminal CT requesting the chunks T at hand. Different configurations may be contemplated in the present disclosure.

In a particular embodiment, transmitting module 14 may determine (S26), based on the priority level associated with each requested chunk T already in cache R (in storing module 12), a transmission priority order TPO. The transmitting module 14 transmits the already cached chunks T according to the determined transmission priority order TPO. Computation and use of such a transmission priority order TPO are however not compulsory in the present disclosure.

If for instance two different requested chunks T are available in cache R, said cache R determines which of these two chunks should be transmitted in priority relative to the other, based on the determined transmission priority order TPO.

In a particular embodiment, if a chunk T stored in cache R is being requested by a plurality of client terminals CT, said cache R may transmit the chunk T in any manner that is deemed appropriate (the chunk can for instance be transmitted in parallel to two or more of the requesting client terminals CT).

In a particular embodiment, cache R may transmit each requested chunk via a dedicated channel of the transmission path between the requesting client terminal CT and the cache R. In order to achieve apparent stream independence, the chunks T transferred by cache R are for instance encapsulated as a series of frames, each marked with the corresponding stream identifier.

The present disclosure allows prioritizing downloading, in an intermediate cache, of all the chunks of multimedia content not yet available in cache, which are requested at a given time by at least one client terminal. When treating multiple chunk requests at the same time, a cache according to the present disclosure can favour downloading of the chunks having a high priority level relative to any other requested chunk having a lower priority level. Based on the priority level assigned by the requesting client terminals to each requested chunk, the cache of the present disclosure can be able to determine an optimized order according to which requested chunks are to be retrieved from one or more remote servers. Thanks to the present disclosure, the cache can retrieve, and thus transmit to the corresponding client terminals, the most urgent chunks of multimedia content in priority, thereby limiting the risks of display interruption and improving user experience.

In a particular embodiment, the download priority module 6 may be configured to determine a high priority download order according to which a plurality of requested high-priority chunks is to be downloaded from server S, based for instance on the state of the high priority counter CH of each of these high-priority chunks. Similarly, the download priority module 6 may be configured to determine a low priority download order according to which a plurality of requested low-priority chunks is to be downloaded from server S, based for instance on the state of the low priority counter CL of each of these low-priority chunks. In a particular embodiment, the downloading module 10 may be configured to download from server S the requested chunks T not yet in cache, according to the high-priority download order and/or the low-priority download order in addition to the download priority order DPO as defined above. This allows adapting the download priority order among several chunks of the high-priority type, and conversely, adapting the download priority order among several chunks of the low-priority type, while still favouring downloading of high-priority chunks over any low-priority chunks. For instance, a high priority chunk having a high priority counter CH at 2 can be downloaded in priority over a high priority chunk having a high priority counter CH at 1, bearing in mind that these two high priority chunks would still be downloaded in priority over any other low-priority chunk.

As indicated earlier, in a particular embodiment, each client terminal CT may assign, to a requested chunk, either a high priority value comprised between HPmin and HPmax, or a low priority value comprise between LPmin and LPmax. In this case, an appropriate weight may be allocated for each requested chunk among high priority chunks, and similarly, an appropriate weight may be allocated for each requested chunk among low priority chunks. In a particular embodiment, cache R may be adapted to adjust the high priority value and low priority value of each requested chunk to allocate larger weights to chunks that are frequently requested and lower weights to those that are less frequently requested.

In a particular embodiment, the receiving module 4 may receive a priority reordering request from a client terminal CT for modifying the priority level P of a chunk T for which a chunk request RQ from this same client terminal CT is already being processed in cache R.

Different situations may arise which can result in a client terminal requesting a change of priority for an already-requested chunk T. Typically, but not exclusively, once a client terminal CT receives a chunk Ta for which a high priority level HP was assigned, the client terminal CT may issue a priority reordering request to the cache R to request an upgrade in priority of the already-requested chunk Tb which is temporally immediately subsequent to chunk Ta in a multimedia content. In a particular embodiment, each time the transfer of a chunk T associated with a client request RQ is completed with a client terminal CT, the cache R can track the priority reordering requests from that client terminal CT.

In a particular embodiment, for each priority reordering request received by the receiving module 4, the download priority module 6 may update the counters CH, CL as follows:
- if the priority reordering request causes an upgrade of priority of a requested chunk from a low priority level LP to a high priority level HP, the associated high priority counter CH is updated to indicate that one more client terminal CT is now requesting said chunk at the high priority level HP while the associated low priority counter CL is updated to indicate that one less client terminal CT is now requesting said chunk at the low priority level LP;
- if the priority reordering request causes a downgrade of priority of a requested chunk from a high priority level HP to a low priority level LP, the associated high priority counter CH is updated to indicate that one less client terminal CT is now requesting said chunk at the high priority level HP while the associated low priority counter CL is updated to indicate that one more client terminal CT is now requesting said chunk at the low priority level LP.

Following the example of figure 6, figure 7 illustrates a case where receiving module 4 of cache R detects:
- reception of a chunk request RQ from client terminal CT2 for a new chunk T3 having a low priority level LP; and
- reception of a priority reordering request from client terminal CT2 requesting an upgrade of the priority level of chunk T1 from the low priority level LP to the high priority level HP.

The chunk request RQ related to new chunk T3 can be treated by cache R as already explained earlier with reference to **figure 4****.**

Further, download priority module 6 may update (S30) the high and low priority counters CH, CL of chunk T1 by incrementing by 1 the high priority counter CH for chunk T1 while decrementing by 1 the low priority counter CL for chunk T1.

The present disclosure allows a cache to track the changes in priority assignments from client terminals and to adapt accordingly the order in which said cache is to download each requested chunk of a multimedia content from one or more remote servers.

In a particular embodiment, the receiving module 4 may receive a cancellation request from a client terminal CT for cancelling a chunk request RQ in progress for that client terminal CT in the cache R.

Different situations may arise which can result in a client terminal requesting cancellation of a previously issued chunk request RQ. A client terminal may for instance update its estimation of the bandwidth of the transmission path between said client terminal and the server R and determine, based on this estimation update, that a chunk previously requested at a given representation should be requested instead at a different (lower or higher) representation.

In a particular embodiment, upon reception of a cancellation request from a client terminal CT for cancelling a chunk request RQ in progress for a chunk T in cache R, said cache R may operate as follows:
- if said chunk T was being requested at the high priority level HP, updating the high priority counter CH of the chunk to indicate that one less client terminal CT is currently requesting said chunk at said high priority level HP; and
- if said chunk T was being requested at the low priority level LP, updating the low priority counter CL of the chunk to indicate that one less client terminal CT is currently requesting said chunk at said low priority level LP.

The present disclosure allows a cache to define a download priority order according to which requested chunks of multimedia content are to be downloaded from at least one remote server, and to dynamically adapt this download priority order if one or more clients cancel a previously-issued request for a particular chunk.

In a particular embodiment, if a cancellation request results in the high priority counter CH and low priority counter CL being both at zero for the corresponding chunk T, the cache R may select, based on how much of said chunk T is already in cache, between:
- aborting download of said chunk from the server S; and
- completing download of said chunk from the server S.
In this particular embodiment, the cache R may also update the fetching list L1 and/or the cache list L2.

Different predefined rules may be implemented by cache R to carry out the above selection. Cache R may, for instance, be configured to determine the expected time required to complete download of the chunk from server S and determine that download of said chunk should be carried on only if said expected time is no more than a predefined time limit.

The present disclosure allows a cache to treat in an optimized manner a cancellation request received from a client terminal.

It should be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved.

While not explicitly described, the present embodiments may be employed in any combination or sub-combination thereof.

The flowchart and/or block diagrams in the figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s).

It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions.

As will be appreciated by one skilled in the art, aspects of the present principles can be embodied as a system, method, computer program or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system."

Furthermore, aspects of the present principles can take the form of a computer readable storage medium. Any combination of one or more computer readable storage medium(s) may be utilized. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer disc, a hard disc, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

This disclosure having been described in particular embodiments, it is clear that it is susceptible to numerous modifications and embodiments within the ability of those skilled in the art and without the exercise of the inventive faculty. Accordingly, the scope of the invention is defined by the scope of the following claims.

## Claims

1. A method for operating a cache (R) configured to be arranged along a transmission path between a plurality of client terminals (CT) and at least one server (S), said method comprising:
- receiving (S2; S10), from said plurality of client terminals (CT), chunk requests (RQ) for at least one chunk (T) of a multimedia content, each requested chunk being assigned a priority level (P);
- determining (S4; S16) a download priority order (DPO) according to which each requested chunk (T) not yet cached in said cache (R) is to be downloaded, said download priority order being determined based on the assigned priority level (P) of each chunk to be downloaded; and
- downloading (S6; S18), from said at least one server (S), each requested chunk not yet cached in said cache according to said download priority order (DPO), such that each requested chunk (T) with a high priority level (HP) is downloaded in priority over any other requested chunk with a lower priority level (LP).

2. The method according to claim 1, comprising:
- storing (S12), for each requested chunk to be downloaded;
▪ a high priority counter (CH) representative of the number of client terminals currently requesting said chunk at said high priority level; and
▪ a low priority counter (CL) representative of the number of client terminals currently requesting said chunk at a low priority level that is lower than said high priority level;
wherein the download priority order (DPO) is determined based on the state of the high priority counter and low priority counter of each chunk to be downloaded.

3. The method according to claim 2, comprising, upon reception (S10) of a chunk request (RQ) from a client terminal (CT):
- if said chunk is requested at said high priority level, updating (S12) the high priority counter of the requested chunk to indicate that one more client terminal is currently requesting said chunk at said high priority level ; and
- if said chunk is requested at said low priority level, updating (S12) the low priority counter of the requested chunk to indicate that one more client terminal is currently requesting said chunk at said low priority level.

4. The method according to claim 2 or 3, comprising:
- receiving a priority reordering request from a client terminal (CT) for modifying the priority level (P) of a chunk (T) for which a chunk request (RQ) from said client terminal is already in progress in said cache (R); and
- updating (S30) the high priority counter (CH) and the low priority counter (CL) of the requested chunk (T) in accordance with said priority reordering request.

5. The method according to any one of claims 2 to 4, comprising, upon reception of a cancellation request from a client terminal (CT) for cancelling a chunk request (RQ) in progress for a chunk (T) in said cache (R):
- if said chunk (T) was requested at said high priority level, updating the high priority counter of the chunk to indicate that one less client terminal is currently requesting said chunk at said high priority level ; and
- if said chunk (T) was requested at said low priority level, updating the low priority counter of the chunk to indicate that one less client terminal is currently requesting said chunk at said low priority level.

6. The method according to claim 5, wherein if said cancellation request results in the high priority counter (CH) and low priority counter (CL) being both at zero for the corresponding chunk, the cache (R) selects, based on how much of said chunk is already in cache, between:
- aborting download of said chunk (T) from said at least one server (S); and
- completing download of said chunk (T) from said at least one server (S).

7. The method according to any one of claims 1 to 6, comprising:
- transmitting (S8; S26), once at least partially available in said cache (R), each requested chunk (T) to the client terminal (CT) from which the corresponding chunk request (RQ) originates, provided that the chunk request is still pending at the time of transmission; wherein the transmission (S8) is carried out according to a transmission priority order determined by said cache (R) based on the assigned priority level (P) of each chunk (T) to be transmitted, such that each requested chunk with said high priority (HP) is transmitted in priority over any other requested chunk with a lower priority level (LP).

8. The method according to claim 7, wherein said transmission (S8) of each requested chunk (T) is carried out over a dedicated channel of the transmission path.

9. The method according to any one of claims 1 to 8, comprising:
- storing (S14) a cache list (L2) representative of each requested chunk (T) stored in said cache (R); and
- storing (S14) a fetching list representative of each requested chunk (T) not yet in cache (R);
wherein, upon completing download (S18) of a requested chunk from said at least one server (S), said cache (R) removes (S22) an entry of the requested chunk from the fetching list (L1) and inserts (S22) an entry of the requested chunk into said cache list (L2).

10. Computer program product (PG) downloadable from a communication network and/or recorded on a medium (16) readable by computer and/or executable by a processor (2), comprising program code instructions for implementing a method according to at least one of claims 1 to 9.

11. Non-transitory computer-readable medium (16) comprising a computer program product (PG) recorded thereon and capable of being run by a processor (2), including program code instructions for implementing a method according to at least one of claims 1 to 9.

12. A cache (R) configured to be arranged along a transmission path between a plurality of client terminals (CT) and at least one server (S), said cache comprising:
- a receiving module (4) for receiving, from said plurality of client terminals, chunk requests (RQ) for at least one chunk (T) of a multimedia content, each requested chunk being assigned a priority level (P);
- a download priority module (6) for determining a download priority order (DPO) according to which each requested chunk (T) not yet cached in said cache is to be downloaded, said download priority order being determined based on the assigned priority level (P) of each chunk to be downloaded; and
- a downloading module (10) for downloading, from said at least one server (S), each requested chunk which is not yet cached in said cache, according to said download priority order (DPO), such that each requested chunk (T) with a high priority level (HP) is downloaded in priority over any other requested chunk with a lower priority level (LP).

13. Cache according to claim 12, wherein said cache is a HTTP Adaptive Streaming aware cache.

14. Cache according to claim 12 or 13, wherein said download priority module (6) is configured to store, for each requested chunk to be downloaded:
▪ a high priority counter (CH) representative of the number of client terminals currently requesting said chunk at said high priority level; and
▪ a low priority counter (CL) representative of the number of client terminals currently requesting said chunk at a low priority level that is lower than said high priority level;
wherein the download priority module (6) is configured to determine the download priority order (DPO) based on the state of the high priority counter and low priority counter of each chunk to be downloaded.

15. Cache configured to be arranged along a transmission path between a plurality of client terminals (CT) and at least one server (S), said cache comprising one or more processors configured to perform:
- receiving (S2; S10), from said plurality of client terminals (CT), chunk requests (RQ) for at least one chunk (T) of a multimedia content, each requested chunk being assigned a priority level (P);
- determining (S4; S16) a download priority order (DPO) according to which each requested chunk (T) not yet cached in said cache (R) is to be downloaded, said download priority order being determined based on the assigned priority level (P) of each chunk to be downloaded; and
- downloading (S6; S18), from said at least one server (S), each requested chunk not yet cached in said cache according to said download priority order (DPO), such that each requested chunk (T) with a high priority level (HP) is downloaded in priority over any other requested chunk with a lower priority level (LP).
